# EUROPÄISCHE PATENTSCHRIFT

(11) **EP 0 338 390 B1**
(45) Veröffentlichungstag und Bekanntmachung des Hinweises auf die Patenterteilung: **16.06.1993**
(21) Anmeldenummer: 89106448.7
(22) Anmeldetag: 12.04.1989
(51) Int. Cl.: E04F 21/22, E04F 15/16, B23C 1/20, E04F 21/165

(54) **Tragbare Vorrichtung zum Fräsen von Fugen zwischen platten- oder bahnförmigen Bodenbelägen**
Portable device to mill grooves between plate or sheet like floor coverings
Appareil portable pour fraiser des rainures entre des plaques ou des couvertures de sol en nappes

(30) Priorität: 21.04.1988 DE 8805314 U
(43) Veröffentlichungstag der Anmeldung: 25.10.1989
(73) Patentinhaber: Wolff GmbH, D-74321 Bietigheim-Bissingen (DE)
(72) Erfinder: Wolff, Dieter, D-7120 Bietigheim/Bissingen (DE)
(74) Vertreter: Lewandowsky, Klaus

(56) Entgegenhaltungen:
- WO-A-87/01152
- DE-A- 3 318 914
- DE-C- 61 798
- DE-C- 110 713
- DE-U- 8 618 558
- FR-A- 759 477
- US-A- 3 721 470

## Beschreibung

Die Erfindung betrifft eine tragbare motorisch angetriebene Vorrichtung zum Herstellen von Fugen bzw. Nuten zwischen auf Auflageflächen, wie Fußböden oder Wänden, verlegten Platten, Bahnen oder dergl., mit einer Messerrolle, einer Fugenrolle, einer Laufrolle und einer Stützrolle, die an der Vorrichtung drehbar gelagert sind sowie mit einem Motor, auf dessen Antriebsachse ein Fugenfräser fest angebracht ist.

Beim Verlegen von Bodenbelägen werden die in Form von Platten oder Bahnen aus Kunststoff angelieferten Bodenbelagmaterialien miteinander verschweißt, um in verlegten Zustand eine geschlossene Fläche zu bilden. Zur Erleichterung des Schweißvorgangs werden zwischen benachbarten Platten oder Bahnen Fugen gefräst, in die dann ein ebenfalls aus Kunststoff bestehender strangförmiger Schweißwerkstoff unter Wärmeeinwirkung eingeschweißt wird, derart, daß die benachbarten Platten oder Bahnen miteinander verbunden sind. Der über die Fugen hinausstehende Schweißwerkstoff wird abgeschert oder abgeschliffen.

Zum Herstellen dieser Fugen sind Fugenfräser bekannt, die mittels eines sich drehenden scheibenförmigen Fräsmessers die Fugen herausarbeiten. Üblicherweise sind die bekannten Fugenfräser mit vier an einem Gehäuse drehbar gelagerten Rollen versehen, um der Vorrichtung eine stabile Auflage bei der Fräsbewegung zu geben. Da Fußböden oder andere Auflageflächen in den meisten Fällen erhebliche Unebenheiten aufweisen, können dieselben bei vier aufliegenden Rollen nicht ausgeglichen werden. Das führt zu sehr unterschiedlichen Frästiefen, was wiederum eine gleichmäßige Schweißarbeit erschwert und die Haltbarkeit der Verbindung zwischen den Platten oder Bahnen vermindert. Es besteht sogar die Gefahr, daß durch den Bodenbelag hindurch der Fußboden angefräst wird, wodurch das Fräsmesser stumpf oder sogar beschädigt werden kann.

Nun ist auch schon eine aus drei Rollen gebildete Auflage einer solchen Vorrichtung bekannt geworden, um die Bodenunebenheiten besser ausgleichen zu können, doch sind aufgrund des Gesamtaufbaus der Vorrichtung die drei Rollen in ihrer Lage zum Arbeitsgriff der Vorrichtung so ungünstig angeordnet, daß beim Druck auf den Griff während des Fräsvorgangs die Vorrichtung sehr leicht zum Kippen neigt, was eine unsaubere Fräsfuge und gegebenenfalls sogar eine Beschädigung des Fräsmessers zur Folge haben kann.

Ungüstig bei dieser bekannten Vorrichtung ist auch die Verwendung einer Rolle, die eine gewünschte Fugentiefe gewährleisten soll, als eine der drei Rollen, die eine sichere Standfestigkeit der Vorrichtung garantieren sollen. Die Rolle liegt in unmittelbarer Nähe des Fräsmessers, so daß das von den Rollen gebildete Stützdreieck erheblich verkleinert wird.

In der deutschen Offenlegungsschrift 33 18 914 ist bereits eine gattungsgemäße Vorrichtung beschrieben, bei der eine Auflagerolle, eine Messerrolle und eine Stützrolle eine Dreipunktauflage bildend angeordnet sind.

Der Erfindung liegt die Aufgabe zugrunde, eine Vorrichtung der gattungsgemäßen Art zu schaffen, die bei einer zuverlässigen Standfestigkeit während des Betriebs eine stets gleichbleibende Fugentiefe gewährleistet.

Dies wird erfindungsgemäß dadurch erreicht, die Messerrolle, die Fugenrolle und die Laufrolle auf der Auflagefläche die Ecken eines gleichseitigen oder gleichschenkligen Dreiecks bilden und daß der Motor mit dem auf seiner Antriebsachse sitzenden Fugenfräser vertikal zur Grundplatte bewegbar angeordnet und an einem Lagerschild befestigt ist, der um eine grundplattenfeste Lagerstelle schwenkbar gelagert ist.

In einer weiteren Ausbildung der Erfindung ist ein an der Grundplatte befestigter Griff im wesentlichen im Flächenschwerpunkt des Dreiecks angeordnet.

Im einzelnen ist die Erfindung so getroffen, daß an dem Lagerschild um eine Lagerstelle eine Stellschwinge schwenkbar gelagert ist, auf der eine Stützrolle lose drehbar sitzt und daß die Stellschwinge bzw. die Stützrolle mittels einer im Lagerschild beweglich geführten Stellschraube entgegen der Kraft einer Druckfeder zur Einstellung der Frästiefe verstellbar und einstellbar ist.

Auf diese Weise kann die in ihrer Fugentiefe einstellbar ausgebildete Vorrichtung vor der Aufnahme des Betriebs gewollt in ihre Betriebsstellung und nach Beendigung der Fugenfräsarbeit in ihre Nichtbereitschaftsstellung gebracht werden. Damit wird zuverlässig vermieden, daß bei unbeabsichtigtem Einschalten der Vorrichtung eine Beschädigung des Fräsmessers sowie des Bodenbelages erfolgt.

Die weiteren Merkmale und die Vorteile sind der Beschreibung eines Ausführungsbeispiels der Erfindung sowie den weiteren Unteranprüchen zu entnehmen.

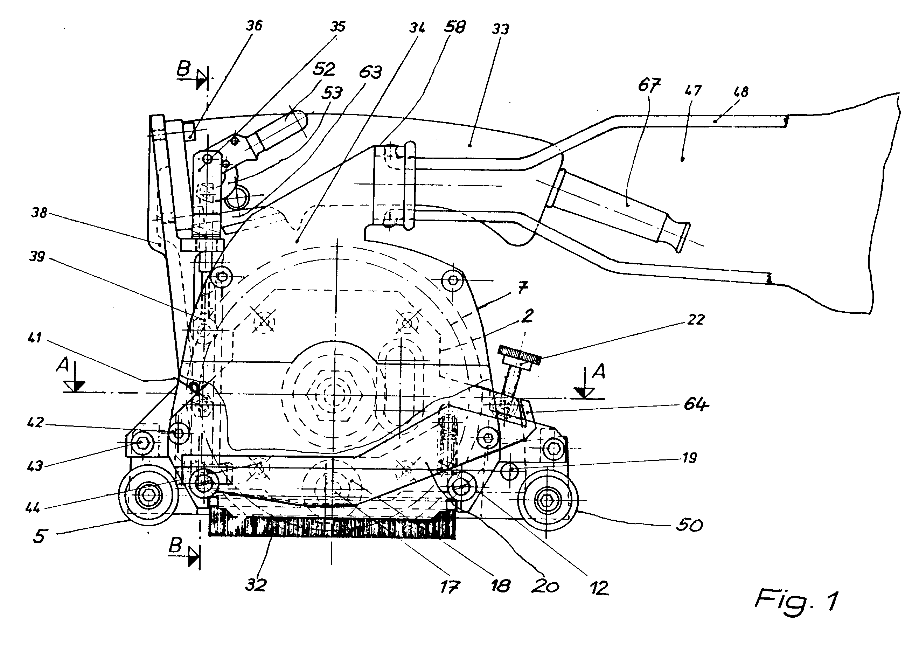

Die Zeichnung zeigt in der
- Fig. 1: die erfindungsgemäße Vorrichtung in Frontansicht

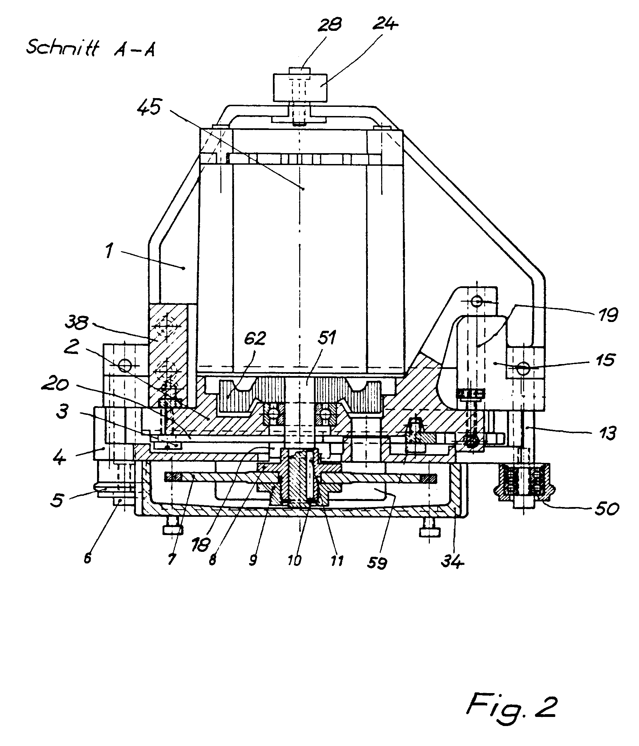

- Fig. 2: die Vorrichtung gemäß Fig. 1 in Draufsicht teilweise im Schnitt entlang der Linie A-A in Fig. 1,

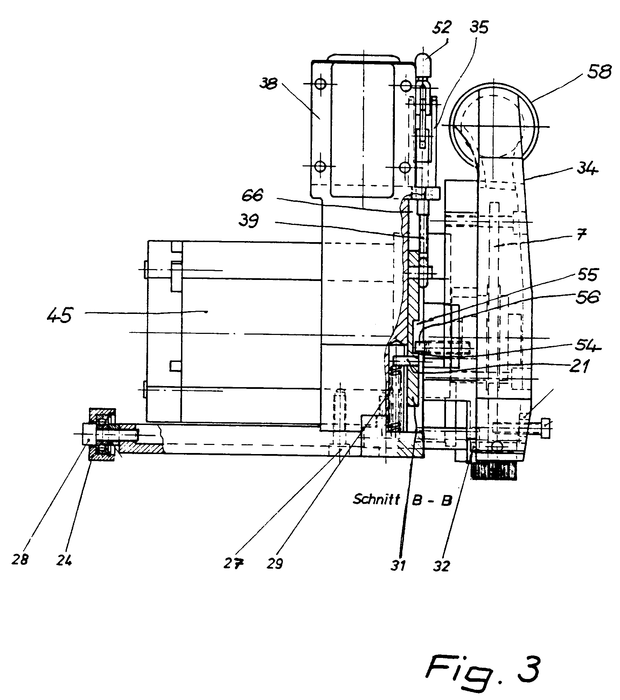

- Fig. 3: die Vorrichtung gemäß Fig. 1 in einer Seitenansicht teilweise im Schnitt entlang der Linie B-B in Fig.1.

Das in der Zeichnung dargestellte Ausführungsbeispiel einer Fugenfräse für Bodenbeläge besteht im wesentlichen aus einer Grundplatte 1, an der um feste Lagerzapfen 6, 13 und 28 eine Messerrolle 5, eine Fugenrolle 50 bzw. eine Laufrolle 24 lose drehbar gelagert sind. Die Anordnung dieser drei Rollen 5, 50 und 24 ist so gewählt, daß ihre Auflagestellen auf dem Bodenbelag annähernd die Ecken eines gleichseitigen Dreiecks bilden. Ein Griff 33 ist mittels Schrauben 36 an einer aufrechtstehenden Stütze 38 befestigt, die mittels Schrauben 27 mit der Grundplatte 1 standfest verschraubt ist. Der Griffbereich des Griffes 33 ist im Flächenschwerpunkt des durch die Auflagestellen der drei Rollen 5, 50 und 24 gebildeten Dreiecks angeordnet. Durch eine derartige Gestaltung wird ein Kippmoment vermieden und der Fugenfräse während des Betriebs eine hohe Standfestigkeit verliehen.

In den Griff ist ein von außen bestätigbarer elektrischer Schalter 63 eingebaut, mit dem der über ein Kabel 67 der Fugenfräse zuführbare Netzstrom an- und abgeschaltet werden kann.

An der Grundplatte 1 ist eine Lagerstelle 15 ausgebildet, an der ein mit U-förmig ausgebildeten Lagerarmen versehener Lagerschild 2 um eine Lagerachse 19 schwenkbar gelagert ist. An dem Lagerschild 2 ist ein sich oberhalb der Grundplatte 1 erstreckender Motor 45 mittels Schrauben 44 angeflanscht.

Auf einer den Lagerschild 2 und einen an der Grundplatte 1 mittels Schrauben 43 befestigten Deckelflansch 4 durchdringenden Antriebsachse 51 ist ein scheibenförmiger Fugenfräser 7 befestigt. Dabei ist der Fugenfräser 7 auf einer Lagerbuchse 8, die mittels einer Passfeder 11 auf einem Bund der Antriebsachse verkeilt ist, durch eine Mutter 9 fest verschraubt. Ein Sicherungsring 10 verhindert ein Lösen der Mutter 9 bzw. des Fugenfräsers 7. Ein auf der Antriebsachse 51 sitzendes Lüfterrad 62 sorgt für die Kühlung und die Abfuhr der anfallenden Späne.

Der Fugenfräser 7 ist innerhalb eines Abdeckgehäuses 34 sicher untergebracht, das mittels Schrauben 42 an dem Deckelflansche 4 befestigt ist und lediglich eine Öffnung 59 für den Durchtritt des Fugenfräsers 7 zum Bodenbelag aufweist. Diese Öffnung 59 ist von einer Dichtungsbürste 32 umgeben, die während des Betriebs der Fugenfräse auf dem Bodenbelag aufsitzt und die anfallenden Späne innerhalb des Abdeckgehäuses 34 hält und dafür sorgt, das die Späne infolge des vom Lüfterrad 62 erzeugten Luftstroms durch einen am Abdeckgehäuse 34 ausgebildeten Auswurfstutzen 58 in einen an demselben angebrachten Spänebehälter gelangen. Der Auswurfstutzen 58 liegt tangential zum Fugenfräser 7 und in der Ebene desselben. Damit ist eine optimale staufreie Abfuhr der Späne gewährleistet. Der sackförmige Spänebehälter 47 ist mit Hilfe eines Bügels 48 aufgeweitet am Auswurfstutzen 58 gehalten.

Ferner ist auf der dem Fugenfräser 7 zugewandten Seite des Lagerschilds 2 um eine Lagerschraube 3 eine Stellschwinge 20 schwenkbar gelagert. Eine Druckfeder 12 drückt das freie Ende der Stellschwinge 20 gegen eine Einstellschraube 22, die in einem Vorsprung des Lagerschilds 2 verstellbar geführt ist. Das freie Ende der Stellschwinge 20 ist als Zeiger 64 ausgebildet, der einer auf dem Vorsprung markierten Skala gegenübersteht. Auf diese Weise kann der Verstellweg der Stellschwinge 20 genau kontrolliert werden und damit die Stellung einer auf der Stellschwinge 20 um eine Achse 17 lose drehbar gelagerten Stützrolle 18 zum Außenumfang der Zähne des Fugenfräsers 7 genau eingestellt werden. Das bedeutet, daß die Tiefe der gefrästen Fugen exakt vorbestimmbar ist.

Der am Lagerschild 2 befestigte Motor 45, der Fugenfräser 7 sowie die stellschwinge 20 mit dem Stützrad 18 bilden eine Baueinheit, die um die Lagerachse 19 gegenüber der Grundplatte 1 verschwenkbar angeordnet ist. Durch diese Verschwenkmöglichkeit kann die Fugenfräse in eine Nichtbereitschaftsstellung und in eine Bereitschaftsstellung gebracht werden. Dadurch wird verbindert, daß bei nicht gewolltem Einschalten der Fugenfräse nicht gewollte Frässchnitte auf dem Bodenbelag erfolgen. Eine unbeabsichtigte Zerstörung des Bodenbelags und eine Beschädigung insbesondere des Fugenfräsers 7 werden somit wirksam verhindert.

Im einzelnen erfolgt das Verschwenken der Baueinheit wie folgt:
Im Bereich des Griffs 33 ist eine Einrichtung zum Verschwenken der Baueinheit in Form eines Schubkurbelgetriebes vorgesehen. Diese Einrichtung besteht aus einer die Kurbel bildenden Handhabe 52, die in einem Lagerteil 35 gelagert ist. Das Lagerteil 35 ist an der Stütze 38 befestigt. An der Hanhabe 35 ist eine Kurbelschwinge 53 angelenkt, die an einer längeneinstellbaren Gewindestange 39 gelenkig angreift, die ihrerseits mit einem Schieber 31 verbunden ist. Der Schieber 31 ist in einer in der Stütze 38 eingearbeiteten vertikalen Führung 66 geführt und durch eine Druckfeder 29, die sich einerseits auf der Grundplatte 1 und andererseits an einem im Schieber 31 sitzenden Anschlagstift 21 abstützt, federbeaufschlagt.

In der dem Lagerschild 2 zugekehrten Seite des Schiebers 31 ist eine Ausnehmung 55 vorgesehen, die eine Anschlagschulter 54 aufweist, an der sich ein im Lagerschild 2 vorgesehener Stift 56 abstützt, wenn die Baueinheit in ihrer oberen Nichtbereitschaftslage steht.

Zum Betriebe des Fugenfräse wird die Messerrolle 5 zwischen zwei Platten oder Bahnen des Bodenbelages gesetzt. Dann wird durch Umlegen der Handhabe 52 und Niederdrücken derselben in ihre untere Übertotpunktlage die Baueinheit abgesenkt und der Fugenfräser 7 in seine Bereitschaftsstellung gebracht. Nach Betätigen des Schalters 63 läuft der Motor 45 an und die gewünschte Fuge kann gefräst werden. Nach kurzem Weg gelangt die Fluchtend zur Messerrolle 5 angeordenete Fugenrolle 50 in die bereits gefräste Fuge und die Fugenfräse ist genau geführt. Infolge der Dreipunktauflage der Rollen 5, 24 und 50 ist ein hohe Standfestigkeit der Fugenfräse gewährleistet.

Die Maßnahme, die Stützrolle 18 unmittelbar vertikal unterhalb der Antriebsachse 51 für den Fugenfräser 7 anzuordnen und mittels der Einstellschraube 22 gegenüber dem Fugenfräser einstellbar zu machen, ermöglicht eine präzise Frästiefe der Fugen, die vor allem auch durch die verschwenkbare Anordnung der Baueinheit, d.h. des Fugenfräsers 7, während des Betriebs eine gleichmäßige Tiefe der Fugen gewährleistet.

Nach Beendigung des Fräsvorgangs wird der Handhebel wieder in seine obere Übertotpunktlage zurückgeschwenkt, wodurch über die Druckfeder 29, den Anschlagstift 21, die Anschlagschulter 54 und den Stift 56 die Baueinheit, also der Lagerschild 2 mit Motor 45, mit Stellschwinge 20 und Stützrolle 18 sowie mit Fugenfräser 7, in ihre Nichtbereitschaftslage gehoben wird. Das bedeutet, daß der Fugenfräser 7 aus der gefrästen Fuge heraus und über den Bodenbelag gehoben wird, so daß auch bei noch nicht abgestelltem Motor 45 eine ungewollte Beschädigung des Bodenbelages nicht erfolgen kann.

## Patentansprüche

1. Tragbare motorisch angetriebene Vorrichtung zum Herstellen von Fugen bzw. Nuten zwischen auf Auflageflächen, wie Fußböden oder Wänden, verlegten Platten, Bahnen oder dergl., mit einer Messerrolle, einer Fugenrolle, einer Laufrolle und einer Stützrolle, die an der Vorrichtung drehbar gelagert sind, sowie mit einem Motor, auf dessen Antriebsachse ein Fugenfräser fest angebracht ist,
**dadurch gekennzeichnet,** daß die Messerrolle (5), die Fugenrolle (50) und die Laufrolle (24) auf der Auflagefläche die Ecken eines gleichseitigen oder gleichschenkligen Dreiecks bilden und daß der Motor (45) mit dem Fugenfräser (7) vertikal zur Grundplatte bewegbar angeordnet und an einem Lagerschild (2) befestigt ist, der um eine grundplattenfeste Lagerstelle (15) schwenkbar gelagert ist.

2. Vorrichtung nach Anspruch 1, dadurch gekennzeichnet, daß ein an der Grundplatte (1) befestigter Griff (33) im wesentlichen im Flächenschwerpunkt des Dreiecks angeordnet ist.

3. Vorrichtung nach einem der Ansprüche 1 oder 2, dadurch gekennzeichnet, daß an dem Lagerschild (2) um eine Lagerstelle (3) eine Stellschwinge (20) schwenkbar gelagert ist, auf der eine Stützrolle (18) lose drehbar sitzt und daß die Stellschwinge (20) bzw. die Stützrolle (18) mittels einer im Lagerschild (2) beweglich geführten Stellschraube (22) entgegen der Kraft einer Druckfeder (12) zur Einstellung der Frästiefe verstellbar und einstellbar ist.

4. Vorrichtung nach Anspruch 3, dadurch gekennzeichnet, daß das freie Ende der Stellschwinge (20) als Zeiger (64) ausgebildet ist, der einer an einem Vorsprung des Lagerschilds (2) angebrachten Skala gegenübersteht und daß in dem Vorsprung die Stellschraube (22) verstellbar geführt ist, die an der Stellschwinge (20) angreift.

5. Vorrichtung nach einem der Ansprüche 1 bis 4, dadurch gekennzeichnet, daß die Achse (17) der Stützrolle (18) vertikal unterhalb der Antriebsachse (51) des Motors (45) liegt.

6. Vorrichtung nach einem der Ansprüche 1 bis 5, dadurch gekennzeichnet, daß der Motor (45) mit dem Fugenfräser (7), dem Lagerschild (2) und der Stellschwinge (20) mit der Stützrolle 18 eine Baueinheit bilden.

7. Vorrichtung nach einem der Ansprüche 1 bis 6, dadurch gekennzeichnet, daß die Baueinheit mittels der Kraft einer Druckfeder (29) von der Grundplatte (1) in vertikaler Richtung wegbewegbar ist.

8. Vorrichtung nach einem der Ansprüche 1 bis 7, dadurch gekennzeichnet, daß zur Bewegung der Baueinheit (45,7,2,20,18) eine als Schubkurbelgetriebe ausgebildete Einrichtung vorgesehen ist.

9. Vorrichtung nach Anspruch 8, dadurch gekennzeichnet, daß die Kurbel des Schubkurbelgetriebes als in der Nähe des Griffs (33) angeordnete Handhabe (52) ausgebildet ist und ein an der Kurbelschwinge (53) angelenkte Schieber (31) mit der Baueinheit in Verbindung steht.

10. Vorrichtung nach einem der Ansprüche 8 oder 9, dadurch gekennzeichnet, daß eine grundplattenfeste Stütze (38) vorgesehen ist, an der zum einen der Griff (33) befestigt ist und zum anderen ein Lagerteil (35) und eine nutenförmige Führung (66) für die als Schubkurbelgetriebe ausgebildete Einrichtung vorgesehen ist.

11. Vorrichtung, nach einem der Ansprüche 9 oder 10, dadurch gekennzeichnet, daß im Schieber (31) eine begrenzte Ausnehmung (55) eingeformt ist, in die ein am Lagerschild (2) vorgesehener Stift (56) hineinragt.

12. Vorrichtung nach Anspruch 11, dadurch gekennzeichnet, daß die eine Schulter (54) der Ausnehmung (55) für den Stift (56) als Ausschlag dient.

13. Vorrichtung nach einem der Ansprüche 1 bis 12, dadurch gekennzeichnet, daß am Schieber (31) ein Anschlagstift (21) sitzt, an dem sich die Druckfeder (29), abstützt.

14. Vorrichtung nach einem der Ansprüche 1 bis 13, dadurch gekennzeichnet, daß die aus dem Motor (45), dem Fugenfräser (7), dem Lagerschild (2) und der Stellschwinge (20) mit Tragrolle (18) bestehende Baueinheit mittels der Einrichtung (52,53,31) in eine obere Nichtbereitschaftsstellung und eine untere Bereitschaftsstellung bewegbar ist.

15. Vorrichtung nach Anspruch 14, dadurch gekennzeichnet, daß die Baueinheit in ihrer oberen Nichtbereitschaftsstellung mittels des Lagerschilds (2) an einem an der Stütze (38) vorgesehenen Anschlag (41) anliegt und daß die Handhabe (52) in Übertotpunktlage liegt.

16. Vorrichtung nach einem der Ansprüche 1 bis 15, dadurch gekenzeichnet, daß an einem den Fugenfräser (7) umgebenden Abdeckgehäuse (34), ein Auswurfstutzen (58) sich parallel zu einer Tangente des Umfangs des Fugenfräses (7) und in dessen Ebene erstreckend ausgebildet ist.

17. Vorrichtung nach Anspruch 16, dadurch gekennzeichnet, daß der Auswurfstutzen (58) sich im wesentlichen tangential zum Umfang des Fugenfräsers (7) erstreckt und in der Ebene desselben liegt.

18. Vorrichtung nach einem der Ansprüchen 16 oder 17, dadurch gekennzeichnet, daß im Fräsbereich des Fugenfräsers (7) das Abdeckgehäuse (34) eine Öffnung (59) aufweist, die von einer im Abdeckgehäuse (34) gehaltenen Dichtungsbürste (32) zumindest teilweise umgeben ist, die in der Bereitschaftsstellung der Vorrichtung auf dem Bodenbelag aufsitzt.

## Claims

1. Portable, motor-driven device for producing grooves and joints, respectively, between plates, webs or the like laid on surfaces such as floors and walls, said device comprising a cutter roll, a groove roll, a castor roll and an idler roll which are rotatably mounted on said device, and further comprising a motor, on the drive shaft of which a groove-milling device is firmly mounted,
**characterized in that** the cutter roll (5), the groove roll (50) and the castor roll (24) form the corners of an equilateral or isosceles triangle on the support surface, and in that the motor (45) is vertically movable together with the groove-milling device (7) relative to the base plate and is attached to a mounting plate (2) which is pivotable about a journal (15) firmly seated on said base plate.

2. Device according to claim 1, characterized in that a grip (33) attached to the base plate (1) is substantially arranged in the center of gravity of the triangle.

3. Device according to one of claims 1 or 2, characterized in that an adjusting rocker arm (20) is pivotally mounted on the mounting plate (2) about a journal (3), in that an idler roll (18) is mounted on said rocker arm so as to be loosely rotatable thereabout and in that an adjusting screw (22) is movably guided in the mounting plate (2) and serves for adjusting the rocking arm (20) and the idler roll (18), respectively, in opposition to the force of a pressure spring (12) for adjustment of the milling depth.

4. Device according to claim 3, characterized in that the free end of the adjusting rocker arm (20) is designed as a pointer (64) which is positioned opposite a scale on a projection of the mounting plate (2), and in that the adjusting screw (22) is adjustably guided in said projection and engages said rocker arm (20).

5. Device according to one of claims 1 to 4, characterized in that the shaft (17) of the idler roll (18) is positioned vertically below the drive shaft (51) of motor (45).

6. Device according to one of claims 1 to 5, characterized in that the motor (45) forms a unit with the groove-milling device (7), the mounting plate (2) and the adjusting rocker arm (20) with its idler roll (18).

7. Device according to one of claims 1 to 6, characterized in that the unit is vertically movable away from the base plate (1) under the action of a pressure spring (29).

8. Device according to one of claims 1 to 7, characterized in that for movement of the unit (45, 7, 2, 20, 18) an element is provided which is designed as a crank mechanism.

9. Device according to claim 8, characterized in that the crank of said mechanism is designed as an operating element (52) arranged in the vicinity of the grip (33), and in that a slider (31) hinged to a crank rocker arm (53) is connected with said unit.

10. Device according to one of claims 8 or 9, characterized in that a support (38) fixed to the base plate is provided to which the grip (33) is attached and on which a bearing portion (35) and a groove-shaped guide portion (66) for the element designed as a crank mechanism are arranged.

11. Device according to one of claims 9 or 10, characterized in that the slider (31) has a recess (55) into which a pin (56) projects which is provided on the mounting plate (2).

12. Device according to claim 11, characterized in that the one shoulder (54) of the recess (55) serves as an abutment for pin (56).

13. Device according to one of claims 1 to 12, characterized in that a stop pin (21) is seated on the slider (31) and that the pressure spring (29) rests on said pin.

14. Device according to one of claims 1 to 13, characterized in that the unit consisting of the motor (45), the groove-milling device (7), the mounting plate (2) and the adjusting rocker arm (20) with the idler roll (18) is movable from an upper inoperative position to a lower operative position by means (52, 53, 31).

15. Device according to claim 14, characterized in that when the unit is in its upper inoperative position it rests via the mounting plate (2) against a stop (41) provided on the support (38), and the operating element (52) is in an over-center snap position.

16. Device according to one of claims 1 to 15, characterized in that on a cover housing (34) enclosing the groove-milling device (7) an ejecting nozzle (58) is provided which extends parallel with a tangent of the circumference of the groove-milling device (7) and in the plane of said device.

17. Device according to claim 16, characterized in that the ejecting nozzle (58) extends substantially tangentially with the circumference of the groove-milling device (7) and in the plane of said device.

18. Device according to one of claims 16 or 17, characterized in that in the milling area of the groove-milling device (7) the cover housing (34) has an opening (59) which is at least partially surrounded by a sealing brush (32), said brush being mounted in the cover housing (34) and resting on the floor covering when the device is in its operative position.

## Revendications

1. Appareil portable, comprenant un moteur et servant à réaliser des joints ou bien des rainures entre plaques ou bandes etc., qui sont posé sur surfaces, comme sols et murs, et comprenant un galet de coupe, un galet de guidage, un galet de roulement et un galet de support libres en rotation et avec le moteur entrainant une fraise à rainures montée solidement sur son arbre, caractérisé en ce que le galet de coupe (5), le galet de guidage (50) et le galet de roulement (24) forment les coins d'en triangle équilatéral ou isocèle et l'ensemble du moteur (45) et de la fraise à rainures (7) est orientable verticalement par rapport à la sole et fixé sur une plaque (2) elle-meme orientable autour d'un appui (15) qui se trouve sur la sole (1).

2. Appareil suivant la revendication 1, caractérisé en ce qu'une poignée (33) fixée sur la sole 81) se trouve au centre de gravité du triangle fermé par les trois galets (5,50 et 24).

3. Appareil suivant une des revendications 1 ou 2, caractérisé en ce qu'il se trouve sur la plaque (2) un element de réglage (20) qui est orientable par montage sur un boulon (3), en ce qu'il se trouve sur cet élément de régla ge (20) un galet de support (18) tournant librement, et que l'element de réglage (20) et le galet de support (18) peuvent etre réglés par une vis de réglage (22) située sur la plaque (2) de facon qu'elle réagisse contre la force d'un ressort de pression (12), afin de régler la profondeur de la rainure.

4. Appareil suivant la revendication 3, caractérisé en ce que l'extrémité libre d'element de réglage (20) est en forme d'aiguille (64) et se trouve face à des graduations marquées sur une saillie de la plaque (2), et la vis de réglage (22) est ajustablement située sur cette saillie.

5. Appareil suivant une des revendications 1 à 4, caractérisé en ce que l'axe (17) du galet de support (18) se trouve à la verticale sous l'axe (51) du moteur (45).

6. Appareil suivant une des revendications 1 à 5, caractérisé en ce que le moteur (45) avec la fraise à rainures (7), la plaque (2) et l'élément de réglage (20) avec le galet de support (18) forment une ensemble.

7. Appareil suivant une des revendications 1 à 6, caractérisé en ce que cet ensemble peut etre actionnée de la sole (1) verticalement par la force d'un ressort de pression (29).

8. Appareil suivant une des revendications 1 à 7 caractérisé en ce qu'une manivelle à coulisse est prévu qui permet de déplacer cette ensemble (45,7,2,20,18).

9. Appareil suivant la revendication 8, caractérisé en ce que la manivelle de la manivelle à coulisse consiste en une manette (52) et se trouve à proximité de la poignée (33), et qu'un coulisseau (31), reliée à une coulisse manivelle (53), est en contact avec l'ensemble.

10. Appareil suivant une des revendications 8 ou 9, caractérisé en ce qu'un support (38), fixeé à la sole, est prévu pour fixer d'une part la poignée (33), et d'autre part une pièce d'appui (35) et une glissière (66) en forme de rainure sont prévues pour la manivelle à coulisse.

11. Appareil suivant une des revendications 9 ou 10 caractérisé en ce que dans le coulisseau (31) se trouve une encoche (55) dans laquelle se loge la tige (56) de la plaque (2).

12. Appareil suivant la revendication 11, caractérisé en ce qu'un bord (54) de l'encoche (55) sert d'arret pour la tige (56).

13. Appareil suivant une des revendications 1 à 12, caractérisé en ce que sur le coulisseau (31) est fixée une tige de butée (21) sur laquelle s'appuie le ressort de pression (29).

14. Appareil suivant une des revendications 1 à 13, caractérisé en ce que l'ensemble constituée du moteur (45), de la fraise à rainures (7), de la plaque (2) et d'élément de réglage (20) avec le galet de support (18) peut etre actionnée à l'aide de l'équipement (52,53,31) dans une position d'attente d'en haute et dans une position de non-attente d'en basse qui correspond a la position de travail.

15. Appareil suivant la revendication 14, caractérisé en ce que l'ensemble lorsqu' il se trouve dans sa position de non-attente à l'aide de la plaque (2), s'appuie contre une butée (41) se trouvant sur le support (38), et que la manette (52) reste dans une position dépassant le point-mort.

16. Appareil suivant une des revendications 1 à 15, caractérisé en ce qu'il se trouve sur le capot (34) qui entoure la fraise à rainures (7) une bouche d'éjection (58) qui est réalisée de facon parallèle par rapport à une tangente de la fraise à rainures (7) et est au meme niveau de cette dernière.

17. Appareil suivant la revendication 16, caractérisé en ce que la bouche d'éjection (58) est réalisée de facon tangentielle par rapport au périmètre de la fraise à rainures (7) et se trouve au meme niveau de cette dernière.

18. Appareil suivant une des revendications 16 ou 17, caracté risé en ce que le capot (34) présente dans le secteur du fraisage une ouver ture (59), qui est partiellement entourée d'une brosse de joint (32) fixée au capot (34) qui frotte sur le re vetement de sol lorsque l'appareil est en position de travail.
